# EUROPÄISCHE PATENTANMELDUNG

(11) **EP 3 093 464 A1**
(43) Veröffentlichungstag der Anmeldung: **16.11.2016**
(21) Anmeldenummer: 16168970.8
(22) Anmeldetag: 10.05.2016
(51) Int. Cl.: F01N 5/02, F28D 15/04, F02G 5/04

(54) **KRAFTFAHRZEUG-WÄRMEÜBERTRAGERSYSTEM**

(30) Priorität: 12.05.2015 DE 102015107427
(71) Anmelder: Benteler Automobiltechnik GmbH, 33102 Paderborn (DE)
(72) Erfinder: Düpmeier, Tobias, Dr., 33100 Paderborn (DE); Rubitschek, Felix, 33104 Paderborn (DE); Przybylski, Sven, 33104 Paderborn (DE)
(74) Vertreter: Griepenstroh, Jörg

(57) **Zusammenfassung**

Die Erfindung betrifft ein Kraftfahrzeug-Wärmeübertragersystem mit einem geschlossenen Kreislauf für ein Arbeitsmedium AM. In einem Verdampfer 1 wird das Arbeitsmedium AM verdampft und strömt zu einem im Kraftfahrzeug oberhalb des Verdampfers 1 angeordneten Kondensator 20. Das im Kondensator 20 kondensierte verflüssigte Arbeitsmedium AM wird schwerkraftgetrieben über eine Rücklaufleitung 21 in den Verdampfer 1 zurückgeführt. Vorzugsweise umfasst der Verdampfer 1 mehrere zu einer Einheit zusammengeschaltete Verdampfermodule 2, 3, wobei jedes Verdampfermodul 2, 3 ein Gehäuse 4 aufweist, in dem eine Wärmetauscherstruktur 5 zur Vergrößerung der Wärmeübertragungsfläche und der Verdampfungsrate angeordnet sind.

## Beschreibung

Die Erfindung betrifft ein Kraftfahrzeug-Wärmeübertragersystem.

In Folge der zunehmenden Effizienz von Verbrennungsmotoren wird das Kühlwasser bei geringen Umgebungstemperaturen, insbesondere in kalten Jahreszeiten, nur langsam erwärmt. Hieraus resultiert ein Wärmedefizit für die Innenraumerwärmung von Kraftfahrzeugen mittels bekannter Wasserheizungen. Aus diesem Grund werden vor allen bei Dieselfahrzeugen serienmäßig elektrische Zuheizer, sogenannte PTC-(Positive Temperature Coefficient) Heizer, in das Klimamodul verbaut. Ein solcher Zuheizer erwärmt die in den Innenraum einströmende Luft zusätzlich. Allerdings führt die für den Betrieb benötigte elektrische Energie zu einem nicht unwesentlichen Kraftstoffmehrverbrauch.

Aus dem Stand der Technik sind verschiedene Ansätze bekannt, die darauf Abzielen, das Wärmedefizit zu verringern, insbesondere durch den Einsatz von Abgaswärmetauschern, mit denen das Kühlwasser durch Abgaswärme beschleunigt erwärmt werden soll.

Die US 4,087,047 bzw. DE 25 23 645 A1 ebenso wie die DE 38 06 418 C2 offenbaren Vorschläge, bei denen das Kühlwasser mittels Wärmerohren, sogenannten Heatpipes, beschleunigt erwärmt werden soll. Hierbei werden konventionelle Wärmerohre verwendet, wobei der Verdampferbereich des Wärmerohrs in Kontakt mit dem Abgas und der Kondensatorteil in Kontakt mit dem Kühlkreislauf des Motors steht. Bekanntermaßen sind Wärmerohre an der Innenwand mit Kapillarstrukturen versehen, die das Arbeitsmedium vom Kondensatorteil zurück in die Verdampferzone transportieren.

Im Umfang der DE 10 2008 007 726 A1 wird ein Wärmerohr vom Kreislauftyp, eine sogenannte Loop Heat Pipe, beschrieben. Dieses Wärmerohr soll Wärme aus dem Abgas zu einem luftgekühlten Kondensator leiten. Über den Kondensator wird die in die Fahrerkabine einströmende Luft erwärmt.

Wärmerohre einschließlich Loop Heat Pipes arbeiten rein passiv, selbstregulierend und ohne zusätzliche Pumpe. Der Wärmetransport erfolgt durch Ausnutzung der Verdampfungsenthalpie, wodurch Verluste sensibler Wärme über eine Dampfleitung kaum ins Gewicht fallen. Demzufolge ist mit Wärmerohren ein höchsteffizienter Wärmetransport möglich. Ein Nachteil von Wärmerohren ist die eingeschränkte Transportleistung unter Vibration. Durch Vibrationen, beispielsweise hervorgerufen durch die Motorschwingungen oder Erschütterungen in Folge des Fahrbetriebs, wirken bei den Wärmerohren Kräfte auf das Arbeitsmedium innerhalb der Kapillarstruktur, welche die Strömung des Arbeitsmediums behindern oder sogar zu einem Austreten des Arbeitsmediums aus der Kapillarstruktur führen können. Bei Wärmerohren des Kreislauftyps bzw. Loop Heat Pipes tritt dieses Problem zwar in den Hintergrund, allerdings sind der Aufbau und die Fertigung von Loop Heat Pipes-Verdampfern zur Abgaswärmenutzung vergleichsweise komplex. Dadurch, dass Abgas sowie flüssiges und dampfförmiges Arbeitsmedium voneinander getrennt werden müssen, sind entsprechende Dichtungskonzepte notwendig. Des Weiteren resultieren aus den Anforderungen der Kapillarstruktur hinsichtlich Porengröße und Porösität vergleichsweise teure Bauteile.

Der Erfindung liegt ausgehend vom Stand der Technik die Aufgabe zugrunde, ein effizientes und kostengünstiges Kraftfahrzeug-Wärmeübertragersystem aufzuzeigen, welches einen Wärmetransport aus dem Abgas zu einem Abnehmer im Kraftfahrzeug, insbesondere einer Innenraumbeheizung des Kraftfahrzeuges, ohne zusätzliche Pumpe ermöglicht.

Die Lösung dieser Aufgabe zeigt Anspruch 1 auf.

Vorteilhafte Ausgestaltungen und Weiterbildungen der Erfindung sind Gegenstand der abhängigen Ansprüche.

Ein erfindungsgemäßes Kraftfahrzeug-Wärmeübertragersystem weist einen geschlossenen Kreislauf für ein Arbeitsmedium auf. In den Kreislauf ist ein Verdampfer integriert. Der Verdampfer steht mit einer Wärmequelle des Kraftfahrzeugs in Kontakt. Bei der Wärmequelle kann es sich insbesondere um das heiße Abgas aus der Brennkraftmaschine des Kraftfahrzeuges handeln. Hierbei ist der Verdampfer im Abgasstrom der Brennkraftmaschine des Kraftfahrzeugs angeordnet und gelangt wärmeübertragend mit dem Abgas in Kontakt. Zur Verdampfung des Arbeitsmediums im Verdampfer können aber auch andere Wärmequellen eines Kraftfahrzeugs genutzt werden, beispielsweise die Abwärme aus Elektronikbauteilen bzw. der Leistungselektronik eines Elektrofahrzeugs. Auch der Elektromotor eines Kraftfahrzeugs selbst kann die Wärmequelle bilden, wobei die Abwärme des Elektromotors zur Verdampfung des Arbeitsmediums im Kraftfahrzeug-Wärmeübertragersystem genutzt wird.

Im Verdampfer wird das Arbeitsmedium verdampft und strömt von dort aus zu einem im Kraftfahrzeug oberhalb des Verdampfers angeordneten Kondensator. Im Kondensator erfolgt ein Wärmeaustausch mit einem Verbraucher, wobei das dampfförmige Arbeitsmedium kondensiert und verflüssigt wird. Der Rücklauf des flüssigen Arbeitsmediums zum Verdampfer erfolgt schwerkraftgetrieben.

Bei dem Kondensator kann es sich insbesondere um einen luftgekühlten Kondensator im Klimamodul des Kraftfahrzeugs oder um den Kondensator einer Innenraumbeheizung des Kraftfahrzeugs handeln. Weiterhin kann der Kondensator Bestandteil einer Erwärmungseinheit für Antriebskomponenten wie dem Schaltgetriebe oder des Motoröls selbst sein.

Da das Arbeitsmedium im geschlossenen Kreislauf allein aufgrund im System bzw. im Kreislauf vorhandener Dichteunterschiede, also durch freie Konvektion transportiert wird, ist eine Pumpe nicht erforderlich, wodurch die Komplexität und die Kosten des Kraftfahrzeug-Wärmeübertragersystems gering sind. Als Arbeitsmedium kommt insbesondere Ethanol zur Anwendung. Selbstverständlich sind auch Wasser oder andere Arbeitsmedien möglich.

Vorteilhafterweise ist dem Verdampfer eine Dampfsammelkammer zugeordnet, in der aus dem Verdampfer strömender Dampf gesammelt und dem Kondensator zugeleitet wird.

Grundsätzlich kann der Verdampfer im Gleichstrom bei dem Abgas und Dampf in die gleiche Richtung strömen oder im Gegenstrom ausgeführt sein. Bei der Gegenstrom-Konfiguration strömen sich die Stoffe entgegen.

Ein besonders vorteilhafter Aspekt der Erfindung sieht vor, dass der Verdampfer zumindest ein Verdampfermodul umfasst mit einem Gehäuse. Das Gehäuse steht mit dem Abgasstrom in Kontakt. Im Gehäuse ist eine Wärmetauscherstruktur eingegliedert. Bei der Wärmetauscherstruktur handelt es sich um Mittel zur Vergrößerung der Wärmeübertragungsfläche und/oder zur Erhöhung der Verdampfungsrate. Bevorzugt besitzen diese Mittel eine poröse Struktur. Insbesondere kann eine Wärmetauscherstruktur durch einen Einsatz aus einem Drahtgestrick oder aus einem Metallvlies bestehen. Als Werkstoff für eine Wärmetauscherstruktur kommt bevorzugt ein gut wärmeleitender Werkstoff, insbesondere Metall, zur Anwendung.

Ein weiterhin vorteilhafter Aspekt sieht vor, dass dem Verdampfer ein Ausgleichsbehälter für das Arbeitsmedium vorgeschaltet ist. Insbesondere ist der Ausgleichsbehälter in die Rücklaufleitung integriert.

Das aus der Brennkraftmaschine des Kraftfahrzeugs abgeleitete Abgas gelangt als Abgasstrom mit dem Verdampfer in Kontakt. Grundsätzlich kann es ausreichen, dass das Abgas einseitig am Verdampfer entlang strömt. Eine praktisch vorteilhafte Ausführungsform sieht vor, dass der Verdampfer über einen Durchgang für den Abgasstrom verfügt. Insbesondere ist ein zentraler Durchgang für den Abgasstrom im Verdampfer vorgesehen. In diesem Zusammenhang ist es weiterhin vorteilhaft, wenn mehrere Verdampfermodule zu einem Verdampfer zusammengeschaltet sind.

Ein vorteilhafter Aspekt hierbei sieht vor, dass plattenartig konfigurierte Verdampfermodule so zueinander angeordnet sind, dass zwischen diesen ein oder mehrere Durchgänge für den Abgasstrom gebildet sind. Die plattenförmigen Verdampfermodule bestehen in einer einfachen Bauweise aus einer Gehäuseschale bzw. -wanne, die durch einen Deckel verschlossen ist. Im Innenraum des Verdampfermoduls ist eine Wärmetauscherstruktur eingegliedert und gegenüber den Wänden über Abstandshalter distanziert.

Vorzugsweise wird der Abgasstrom zentral durch den Verdampfer geleitet. Die zum Verdampfer zusammengeschalteten Verdampfermodule bilden mithin einen Durchgang, insbesondere einen zentrischen Durchgang, für das Abgas aus. In dem Durchgang oder den Durchgängen können Mittel zur Vergrößerung der Wärmeübergangsfläche vorgesehen sein, insbesondere Rippen, Stege oder Lamellen. Eine vorteilhafte Ausführungsform sieht vor, dass die Mittel zur Vergrößerung der Wärmeübergangsfläche durch eingelötete Wärmetauscherfinnen gebildet sind. Das Abgas strömt zwischen den Wärmetauscherfinnen entlang der Bodenwände der Gehäuseschalen. Hierdurch ist ein sehr guter Wärmeübergang gewährleistet.

Im Vergleich zu Systemen mit Wärmerohr, insbesondere Wärmerohr vom Kreislauftyp bzw. Loop Heat Pipe, besteht der Vorteil, dass weder eine Kapillarstruktur noch ein Dichtungskonzept zur Trennung von Dampf und Flüssigphase im Verdampfer notwendig ist. An Stelle einer Kapillarstruktur wird eine poröse Wärmetauscherstruktur, z. B. ein Drahtgestrick oder ein Metallvlies, zur Erhöhung der Verdampfungsrate eingesetzt. Das erfindungsgemäße Kraftfahrzeug-Wärmeübertragersystem ist weniger komplex und damit kostengünstiger in der Fertigung.

Die Erfindung ist nachfolgend anhand eines in den Zeichnungen dargestellten Ausführungsbeispiels ergänzend beschrieben.
- Figur 1: technisch schematisiert ein erfindungsgemäßes Kraftfahrzeug-Wärmeübertragersystem und
- Figur 2: wiederum technisch vereinfacht und schematisiert einen Längsschnitt durch ein Wärmetauschermodul des erfindungsgemäßen Kraftfahrzeug-Wärmeübertragersystems.

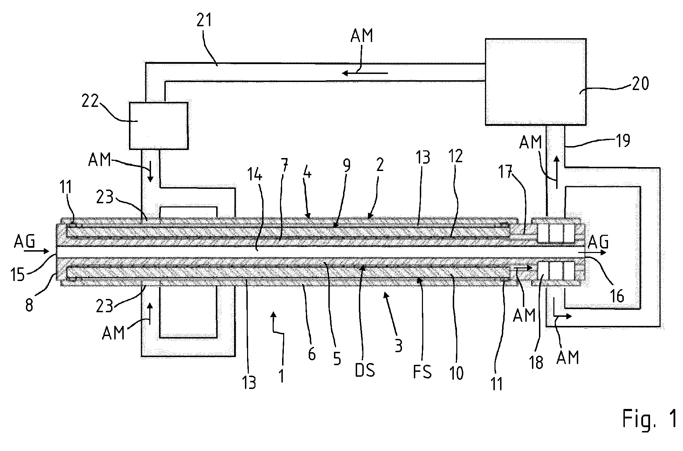

Das Kraftfahrzeug-Wärmeübertragersystem umfasst einen geschlossenen Kreislauf für ein Arbeitsmedium AM und weist einen in den Abgasstrom einer Brennkraftmaschine eines Kraftfahrzeugs integrierten Verdampfer 1 auf. Der Abgasstrom bzw. das Abgas ist in der Figur 1 durch den Pfeil AG verdeutlicht.

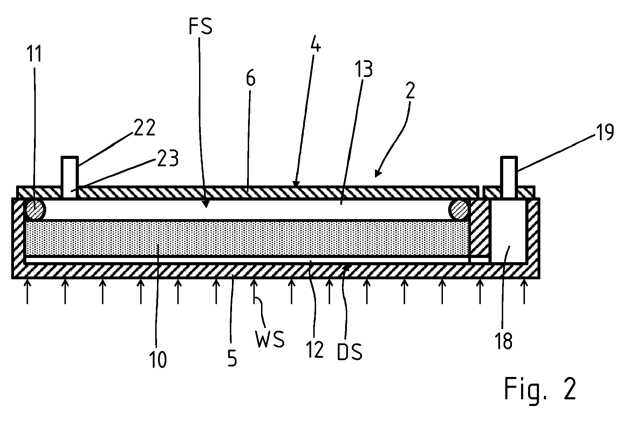

Der Verdampfer 1 umfasst zwei plattenartig konfigurierte Verdampfermodule 2, 3 (siehe hierzu auch Figur 2). Jedes Verdampfermodul 2, 3 weist ein Gehäuse 4 gebildet aus einer Gehäuseschale 5 und einem Deckel 6 auf. Die Gehäuseschale 5 besitzt eine unmittelbar mit dem Abgas AG in Kontakt gelangende Bodenwand 7 mit einem umlaufenden Rand 8. Im Gehäuse 4 ist eine Wärmetauscherstruktur 9 angeordnet. Bei der Wärmetauscherstruktur 9 handelt es sich um Mittel zur Vergrößerung der Wärmeübertragerfläche und Erhöhung der Verdampfungsrate. Die Wärmetauscherstruktur 9 besitzt insbesondere eine poröse Struktur und besteht aus Metall. Insbesondere handelt es sich bei dem Mittel um einen gesinterten Plattenkörper 10. Der Plattenkörper 10 ist in der Gehäuseschale 5 lageorientiert und über Abstandshalter 11 gegenüber dem Deckel 6 abgedichtet. Die Abstandshalter 11 sind durch Dichtungen gebildet. Auf der zur Bodenwand 7 gerichteten Dampfseite DS des Plattenkörpers 10 sind Dampfkanäle 12 vorgesehen. Die Dampfkanäle 12 sind materialeinheitlich einstückig im Plattenkörper 10 ausgebildet. Auf der gegenüberliegenden Flüssigkeitsseite FS des Verdampfermoduls 2, 3 befindet sich ein Verteilraum 13 zur Verteilung des flüssigen Arbeitsmediums über die Flüssigkeitsseite FS des Plattenkörpers 10.

Das obere Verdampfermodul 2 und das untere Verdampfermodul 3 sind zum Verdampfer 1 zusammengeschlossen und bilden zwischen sich einen Durchgang 14 für den Abgasstrom AG aus. Das Abgas tritt über den Abgaseinlass 15 des Verdampfers 1 in diesen ein und wird durch den Durchgang 14 bis zum Abgasaustritt 16 geleitet. Hierbei wird Wärme vom Abgas auf den Verdampfer 1 und das Arbeitsmedium AM übertragen. Der Wärmestrom ist in der Figur 2 durch die Pfeile WS verdeutlicht. Die Aufheizung des Arbeitsmediums AM im Verdampfer 1 erfolgt bis über die Verdampfungstemperatur des Arbeitsmediums AM, sodass das Arbeitsmedium im Verdampfer 1 verdampft. Der Verdampfer 1 wird im Gleichstrom betrieben, d. h. Abgas AG und dampfförmiges Arbeitsmedium AM strömen in die gleiche Richtung. Endseitig jedes Verdampfermoduls 2, 3 gelangt das dampfförmige Arbeitsmedium AM über einen Dampfaustritt 17 in eine Dampfsammelkammer 18. Von der Dampfsammelkammer 18 strömt das dampfförmige Arbeitsmedium AM über eine Dampfleitung 19 zu einem im Kraftfahrzeug oberhalb des Verdampfers 1 angeordneten Kondensator 20. Im Kondensator 20 wird Wärme vom dampfförmigen Arbeitsmedium AM an einen Verbraucher abgegeben. Insbesondere ist der Kondensator 20 Bestandteil der Innenraumbeheizung des Kraftfahrzeugs und/oder einem Klimamodul zugeordnet. In Folge der Wärmeabgabe wird das dampfförmige Arbeitsmedium AM im Kondensator 20 verflüssigt und strömt schwerkraftgetrieben über eine Rücklaufleitung 21 zurück in den Verdampfer 1. Dem Verdampfer 1 ist ein Ausgleichsbehälter 22 für das Arbeitsmedium AM vorgeschaltet, welcher in die Rücklaufleitung 21 integriert ist. Das flüssige Arbeitsmedium AM tritt jeweils über einen Einlass 23 wieder in die Verdampfermodule 2, 3 des Verdampfers 1 ein.

Das erfindungsgemäße Kraftfahrzeug-Wärmeübertragersystem kommt ohne eine zusätzliche Pumpe im Kreislauf aus.

### Bezugszeichen:

1 - Verdampfer
2 - Verdampfermodul
3 - Verdampfermodul
4 - Gehäuse
5 - Gehäuseschale
6 - Deckel
7 - Bodenwand
8 - Rand v. 5
9 - Wärmetauscherstruktur
10- Plattenkörper
11 - Abstandshalter
12- Dampfkanal
13- Verteilraum
14- Durchgang
15- Abgaseinlass
16- Abgasaustritt
17 - Dampfaustritt
18- Dampfsammelkammer
19- Dampfleitung
20 - Kondensator
21 - Rücklaufleitung
22 - Ausgleichsbehälter
23 - Einlass
AG - Abgasstrom
AM - Arbeitsmedium
DS - Dampfseite
FS - Flüssigkeitsseite

## Patentansprüche

1. Kraftfahrzeug-Wärmeübertragersystem, **dadurch gekennzeichnet, dass** ein geschlossener Kreislauf für ein Arbeitsmedium vorgesehen ist mit einem Verdampfer (1) in dem das Arbeitsmedium (AM) verdampft und zu einem im Kraftfahrzeug oberhalb des Verdampfers (1) angeordneten Kondensator (20) strömt und das im Kondensator (20) kondensierte flüssige Arbeitsmedium schwerkraftgetrieben über eine Rücklaufleitung (21) in den Verdampfer (1) zurückgeführt wird.

2. Kraftfahrzeug-Wärmeübertragersystem nach Anspruch 1, **dadurch gekennzeichnet, dass** dem Verdampfer (1) eine Dampfsammelkammer (18) zugeordnet ist.

3. Kraftfahrzeug-Wärmeübertragersystem nach Anspruch 1 oder 2, **dadurch gekennzeichnet, dass** der Verdampfer (1) zumindest ein Verdampfermodul (2, 3) umfasst mit einem Gehäuse (4) und einer im Gehäuse (4) angeordneten Wärmetauscherstruktur (9).

4. Kraftfahrzeug-Wärmeübertragersystem nach Anspruch 3, **dadurch gekennzeichnet, dass** die Wärmetauscherstruktur (9) eine poröse Struktur besitzen.

5. Kraftfahrzeug-Wärmeübertragersystem nach einem der Ansprüche 1 bis 4, **dadurch gekennzeichnet, dass** dem Verdampfer (1) ein Ausgleichsbehälter (22) für das Arbeitsmedium (AM) vorgeschaltet ist.

6. Kraftfahrzeug-Wärmeübertragersystem nach einem der Ansprüche 1 bis 5, **dadurch gekennzeichnet, dass** der Verdampfer (1) über einen Durchgang (14) für den Abgasstrom (AG) verfügt.
